# EUROPEAN PATENT APPLICATION

(11) **EP 4 521 227 A1**
(43) Date of publication of application: **12.03.2025**
(21) Application number: 24197378.3
(22) Date of filing: 29.08.2024
(51) Int. Cl.: G06F 3/06, G11C 7/20, G11C 7/24, G11C 16/22, G06F 12/14

(54) **METHODS, SYSTEMS, AND APPARATUSES FOR SHREDDING DATA**

(30) Priority: 07.09.2023 US 202318463041
(71) Applicant: STMicroelectronics International N.V., 1228 Plan-les-Ouates, Geneva (CH)
(72) Inventor: MODAVE, Jean-Louis, 1340 OTTIGNIES (BE); DOCQUIER, Guillaume, 4300 WAREMME (BE)
(74) Representative: Cabinet Beaumont

(57) **Abstract**

Various examples in accordance with the present disclosure provide example methods, systems, and apparatuses that shred data stored in a memory unit by generating a random value, determining a complement of the random value, and overprogramming the memory unit to write in the memory unit successively the random value and the complement of the random value.

## Description

### FIELD OF THE INVENTION

Example embodiments of the present disclosure relate generally to data processing and, more particularly, to methods, systems and apparatuses for shredding data stored in memory units.

### BACKGROUND

Applicant has identified many technical challenges and difficulties associated with data processing.

### BRIEF SUMMARY

Various embodiments described herein related to methods, apparatuses, and systems for shredding data stored in memory units.

In some embodiments, an example method comprises generating, by a processor, a random value; determining, by the processor, a complement of the random value; and shredding data stored in the memory unit by overprogramming the memory unit to write in the memory unit successively the random value and the complement of the random value.

In some embodiments, the memory unit is a non-volatile memory (NVM).

In some embodiments, the NVM is an electrically erasable programmable read-only memory (EEPROM).

In some embodiments, the NVM is a Flash memory.

In some embodiments, the NVM is secured with a scrambling logic.

In some embodiments, the random value is generated using a random number generator.

In some embodiments, determining the complement of the random value comprises performing, by the processor, a NOT operation on the random value.

In some embodiments, shredding the data stored in the memory unit is performed upon a power failure detection.

In some embodiments, shredding the data stored in the memory unit is performed upon completion of cryptographic operations.

In some embodiments, an electronic device is provided. In some embodiments, the electronic device comprises a memory and one or more processors communicatively coupled to the memory. In some embodiments, the one or more processors are configured to: generate a random value; determine a complement of the random value; and shred data stored in the memory by overprogramming the memory to write in one or more memory units of the memory unit successively the random value and the complement of the random value.

In some embodiments, the one or more processors are configured to perform the steps of generating the random value, determining the complement of the random value, and shredding the data for each of the one or more memory units of the memory.

In some embodiments, one or more non-transitory computer-readable storage media for shredding data stored in a memory unit is provided. In some embodiments, the one or more non-transitory computer-readable storage media comprise instructions that, when executed by one or more processors, cause the one or more processors to: generate a random value; determine a complement of the random value; and shred data stored in a memory unit by overprogramming the memory unit to write in the memory unit successively the random value and the complement of the random value.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 provides an example schematic block diagram that illustrates example components associated with an example apparatus in accordance with some embodiments of the present disclosure;
FIG. 2 provides an example electronic circuit in accordance with some embodiments of the present disclosure;
FIG. 3 provides an example flow diagram that illustrates example steps and/or example operations associated with example methods in accordance with some embodiments of the present disclosure;
FIG. 4 provides an example memory map diagram that illustrates example data operations associated with example methods in accordance with some embodiments of the present disclosure;
FIG. 5 provides an example flow diagram that illustrates overprogramming a memory unit to write in the memory unit successively a random value and the complement of the random value in accordance with some embodiments of the present disclosure;
FIG. 6 provides an example memory map diagram that illustrates overprogramming a memory unit to write in the memory unit successively a random value and the complement of the random value in accordance with some embodiments of the present disclosure; and
FIG. 7 provides an example diagram that illustrates an example memory unit secured with an example scrambling logic in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

In the present disclosure, the term "shredding" and "memory shredding" refer to methods, apparatus, and/or systems that may fragment, shred, and/or erase data and/or information stored in the memory units so that data and/or information stored in the memory units are uninterpretable and/or unreadable to unauthorized parties.

The implementation of memory shredding may provide various technical benefits and advantages. For example, performing memory shredding on memory units may protect the confidentiality of data and/or information stored in the memory (such as, but not limited to, non-volatile memory). As an example, after an example implementation of memory shredding on example memory units, sensitive and/or confidential data and/or information may no longer be stored directly in the memory units, but instead stored in the memory units in a masked fashion.

Some methods may implement memory shredding to wipe sensitive data that is stored in the memory units by updating the memory units through a single overprogramming function. In the present disclosure, the term "overprogramming" refers to an example process of intentionally programming additional and/or surplus of data over data that has been stored in one or more memory units. In other words, an example overprogramming operation writes new data and/or information onto memory units that already contains data. For example, some methods may conduct a single overprogramming operation with a value that comprises all 0s (for example, 0X00000000). However, such methods are plagued by many technical challenges and difficulties. For example, such methods cannot guarantee that all bits of sensitive data are effectively cleared.

Various embodiments of the present disclosure overcome such technical challenges and difficulties, and provide various technical advantages and improvements. For example, various embodiments of the present disclosure may shred data stored in a memory unit by generating a random value, determining a complement of the random value, and shredding data stored in the memory unit by overprogramming the memory unit to write in the memory unit successively the random value and the complement of the random value. As such, various embodiments of the present disclosure may provide various technical benefits and advantages such as, but not limited to, guaranteeing that sensitive data stored in the memory units is wiped or shredded such that it cannot be retrieved later by an unauthorized party (such as, but not limited to, an attacker), thereby improving security and confidentiality of data storage and processing.

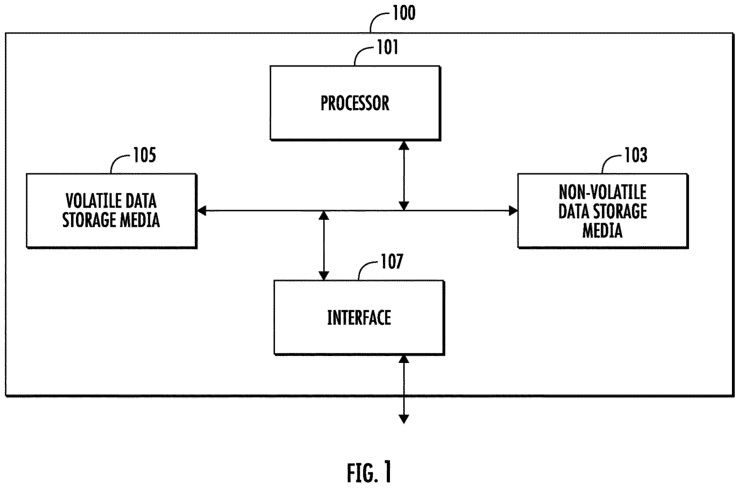

Referring now to FIG. 1, an example schematic diagram of an example apparatus 100 according to some embodiments of the present disclosure is illustrated.

In general, the terms "apparatus," "controller," "computing entity," "computer," "entity," "device," "system," and/or similar words used herein interchangeably refer to, for example, one or more computers, desktops, mobile phones, tablets, phablets, notebooks, laptops, distributed systems, kiosks, input terminals, servers, server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating, generating, monitoring, evaluating, comparing, and/or similar terms used herein interchangeably. In some embodiments, these functions, operations, and/or processes can be performed on data, content, information, and/or similar terms used herein interchangeably.

In some embodiments, the example apparatus 100 comprises, or is in communication with, one or more processors (also referred to as processors, processing circuitry, and/or similar terms used herein interchangeably) such as, but not limited to, the processor 101 that communicates with other elements within the example apparatus 100 (for example, but not limited to, via bus), as shown in the example illustrated in FIG. 1. In some embodiments, the processor 101 may be embodied in a number of different ways. For example, the processor 101 may be embodied as one or more microcontrollers, microprocessors, controllers, multi-core processors, complex programmable logic devices (CPLDs), co-processing entities, application-specific instruction-set processors (ASIPs), and/or the like. Additionally, or alternatively, the processor 101 may be embodied as one or more other forms of processing devices or circuitry. In the present disclosure, the term "circuitry" may refer to an entirely hardware embodiment or a combination of hardware and computer program products. In some embodiments, the processor 101 may be embodied as integrated circuits, application specific integrated circuits (ASICs), field programmable gate arrays (FPGAs), programmable logic arrays (PLAs), hardware accelerators, other circuitry, and/or the like. In some embodiments, the processor 101 may be configured for a particular use or configured to execute instructions stored in the volatile data storage media 105, the non-volatile data storage media 103, and/or otherwise accessible to the processor 101. As such, whether configured by hardware or computer program products, or by a combination thereof, the processor 101 may be capable of performing steps or operations according to embodiments of the present disclosure when configured accordingly.

In some embodiments, the example apparatus 100 comprises, or is in communication with, non-volatile data storage media 103 (also referred to as non-volatile memory, non-volatile storage, non-volatile media, non-volatile memory storage, non-volatile memory circuitry and/or similar terms used herein interchangeably), as shown in the example illustrated in FIG. 1. In some embodiments, the non-Volatile data storage media 103 may include, but not limited to, hard disks, read-only memory (ROM), programmable read-only memory (PROM), erasable programmable read-only memory (EPROM), electrically erasable programmable read-only memory (EEPROM), and/or the like. Additionally, or alternatively, in some embodiments, the non-volatile data storage media 103 may include, but not limited to, Hard Disk Drives (HDDs), Solid-State Drives (SSDs), flash memory (such as, but not limited to, Serial Flash Memory, NAND Flash Memory, NOR Flash Memory, and/or the like), multimedia memory cards (MMCs), secure digital (SD) memory cards, SmartMedia cards, CompactFlash (CF) cards, Memory Sticks, and/or the like. Additionally, or alternatively, the non-volatile data storage media 103 may include, but not limited to, Conductive-Bridging Random Access Memory (CBRAM), Phase-change RAM (PRAM), Ferroelectric RAM (FeRAM), Non-Volatile RAM (NVRAM), Magnetic RAM (MRAM), Resistive RAM (RRAM), Silicon-Oxide-Nitride-Oxide-Silicon (SONOS), Floating Junction Gate RAM (FJG RAM), millipede memory, racetrack memory, and/or the like.

In some embodiments, the non-volatile data storage media 103 may store databases, database instances, database management systems, data, applications, programs, program modules, scripts, source code, object code, byte code, compiled code, interpreted code, machine code, executable instructions, and/or the like. The term database, database instance, database management system, and/or similar terms used herein interchangeably may refer to a collection of records or data that is stored in a computer-readable storage medium using one or more database models, such as a hierarchical database model, network model, relational model, entity-relationship model, object model, document model, semantic model, graph model, and/or the like.

In some embodiments, the example apparatus 100 comprises, or is in communication with, volatile data storage media 105 (also referred to as volatile memory, volatile storage, volatile media, volatile memory storage, volatile memory circuitry and/or similar terms used herein interchangeably), as shown in the example illustrated in FIG. 1. In some embodiments, the volatile storage or memory may also include, but not limited to, random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), and/or the like. In some embodiments, the volatile data storage media 105 may be used to store at least portions of the databases, database instances, database management systems, data, applications, programs, program modules, scripts, source code, object code, byte code, compiled code, interpreted code, machine code, executable instructions, and/or the like being executed by, for example, the processor 101. Thus, the databases, database instances, database management systems, data, applications, programs, program modules, scripts, source code, object code, byte code, compiled code, interpreted code, machine code, executable instructions, and/or the like may be used to control certain aspects of the operation of the example apparatus 100 with the assistance of the processor 101.

In some embodiments, the example apparatus 100 includes one or more interfaces including, but not limited to, interface 107 for communicating with at least one processor (for example, but not limited to, the processor 101 of FIG. 1 described above), volatile data storage media (for example, but not limited to the volatile data storage media 105 of FIG. 1 described above), non-volatile data storage media (for example, but not limited to, the non-volatile data storage media 103 of FIG. 1 described above), computing entity and/or other component. For example, the interface 107 may facilitate communicating data, content, information, and/or similar terms used herein interchangeably that can be transmitted, received, operated on, processed, displayed, stored, and/or the like. In some embodiments, such communication may be executed through the interface 107 according to a wired data transmission protocol, such as, but not limited to, Double Data Rate (DDR), Peripheral Component Interconnect (PCI), PCI Express, Serial Advanced Technology Attachment (Serial ATA), Fiber Distributed Data Interface (FDDI), Digital Subscriber Line (DSL), Ethernet, Asynchronous Transfer Mode (ATM), Non-Volatile Memory Express (NVMe), Small Computer system Interface (SCSI), Inter-Integrated Circuit (I2C), Serial Peripheral Interface (SPI), Universal Serial Bus (USB), frame relay, Data Over Cable Service Interface Specification (DOCSIS), and/or any other wired transmission protocol. Additionally, or alternatively, in some embodiments, the interface 107 may be configured to communicate via wireless external communication networks using any of a variety of protocols, such as, but not limited to, general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), HighSpeed Downlink Packet Access (HSDPA), IEEE 802.11 (Wi-Fi), Wi-Fi Direct, 802.16 (WiMAX), Ultra-Wideband (UWB), infrared (IR) protocols, Near Field Communication (NFC) protocols, Wibree, Bluetooth protocols, wireless USB protocols, and/or any other wireless protocol.

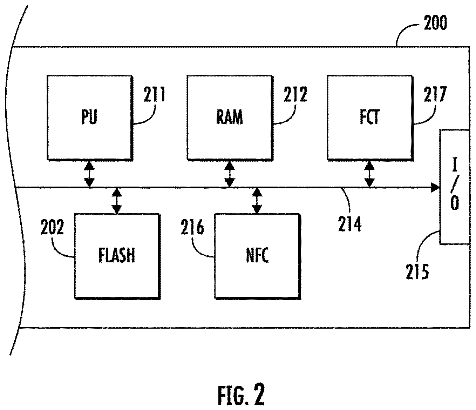

FIG. 2 schematically shows an embodiment of an electronic circuit 200 in the form of blocks that may implement example embodiments of the present disclosure.

In some embodiments, the electronic circuit 200 comprises a processing unit 211 (PU) for example, a state machine, a microprocessor, a programmable logic circuit, etc. In some embodiments, the electronic circuit 200 comprises one or more volatile storage areas 212 (for example, of RAM or register type) to temporarily store information (such as, but not limited to, instructions, addresses, data) during the processing. In some embodiments, the electronic circuit 200 comprises one or more non-volatile storage areas, including at least one flash-type memory 202 (FLASH) for durably storing information, in particular when the circuit is not powered. In some embodiments, the electronic circuit 200 comprises one or more data, address, and/or control buses 214 between the different elements internal to the electronic circuit 200. In some embodiments, the electronic circuit 200 comprises an input/output interface 215 (I/O) for communication (for example, of series bus type) with the outside of the electronic circuit 200.

In some embodiments, the electronic circuit 200 may also integrate a contactless communication circuit 216 (such as Contactless Frontend (CLF)) of near-field communication type (NFC). In some embodiments, the electronic circuit may integrate other functions, symbolized by a block 217 (as such functional circuit (FCT)), according to the application, for example, a crypto-processor, other interfaces, other memories, etc.

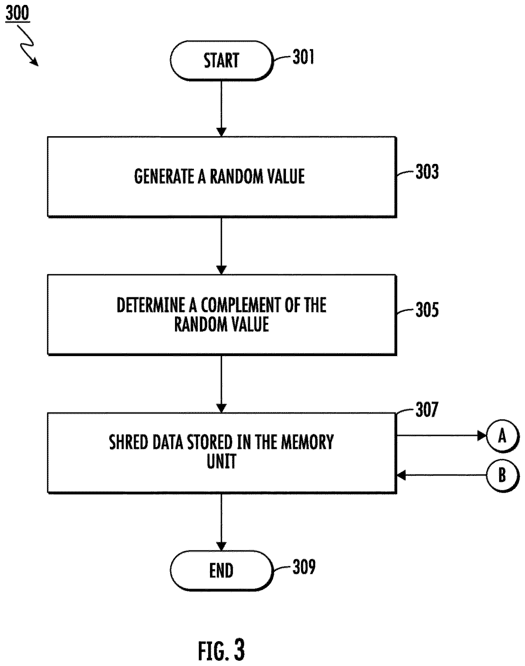

Various example methods described herein, including, for example, those as shown in FIG. 3 to FIG. 6, may provide various technical advantages and/or improvements described above.

It is noted that each block of the flowchart, and combinations of blocks in the flowchart, may be implemented by various means such as hardware, firmware, circuitry and/or other devices associated with execution of software including one or more computer program instructions. For example, one or more of the methods described in FIG. 3 to FIG. 6 may be embodied by computer program instructions, which may be stored by a non-transitory memory of an apparatus employing an embodiment of the present disclosure and executed by a processor in the apparatus. These computer program instructions may direct a computer or other programmable apparatus to function in a particular manner, such that the instructions stored in the computer-readable storage memory produce an article of manufacture, the execution of which implements the function specified in the flowchart block(s).

As described above and as will be appreciated based on this disclosure, embodiments of the present disclosure may be configured as methods, mobile devices, backend network devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

Referring now to FIG. 3, an example flow diagram 300 illustrates example methods for shredding data stored in a memory unit in accordance with some embodiments of the present disclosure.

As described above, there are many technical challenges and difficulties associated with memory shredding. Various embodiments of the present disclosure overcome such technical challenges and difficulties, and provide various technical advantages and improvements. For example, various embodiments in accordance with the example methods shown in FIG. 3 may shred data stored in a memory unit by generating a random value, determining a complement of the random value, and shredding data stored in the memory unit by overprogramming the memory unit to write in the memory unit successively the random value and the complement of the random value. As such, various embodiments of the present disclosure in accordance with the example methods shown in FIG. 3 may provide various technical benefits and advantages such as, but not limited to, improving security and confidentiality of data storage and processing by effectively wiping or shredding sensitive data stored in the memory units such that it cannot be retrieved later by an unauthorized party (such as, but not limited to, an attacker).

In the example shown in FIG. 3, example methods in accordance with some embodiments of the present disclosure start at step/operation 301. Subsequent to and/or in response to step/operation 301, some example methods in accordance with some embodiments of the present disclosure proceed to step/operation 303. In some embodiments, an example processor (such as, but not limited to, the processor 101 of the example apparatus 100 described above in connection with FIG. 1, the processing unit 211 of the electronic circuit 200 described above in connection with FIG. 2, and/or the like) may generate a random value at step/operation 303.

In some embodiments, a random value may comprise a string of one or more bits, where each bit is random. For example, an example random value may be generated based at least in part on implementing one or more random number generators (such as, but not limited to, true random number generators). In the present disclosure, the terms "random number generator" or "RNG" refer to software algorithms and/or computational models that generate one or more random values. In such an example, an example processor (such as, but not limited to, the processor 101 of the example apparatus 100 described above in connection with FIG. 1, the processing unit 211 of the electronic circuit 200 described above in connection with FIG. 2, and/or the like) may receive the random value from the example random number generator, and the random value may comprise one or more bits that are randomly generated.

Referring back to FIG. 3, subsequent to and/or in response to step/operation 303, some example methods in accordance with some embodiments of the present disclosure proceed to step/operation 305. In some embodiments, an example processor (such as, but not limited to, the processor 101 of the example apparatus 100 described above in connection with FIG. 1, the processing unit 211 of the electronic circuit 200 described above in connection with FIG. 2, and/or the like) may determine a complement of the random value at step/operation 305.

In the present disclosure, two value are complements of each other if each bit in one value is the inverse or opposite of the corresponding bit in the other value. As such, each bit in a complement of a random value is the inverse or opposite of the corresponding bit in the other value. For example, if the first bit in the example random value is zero ("0"), the first bit in the example complement of the random value is one ("1"), and vice versa.

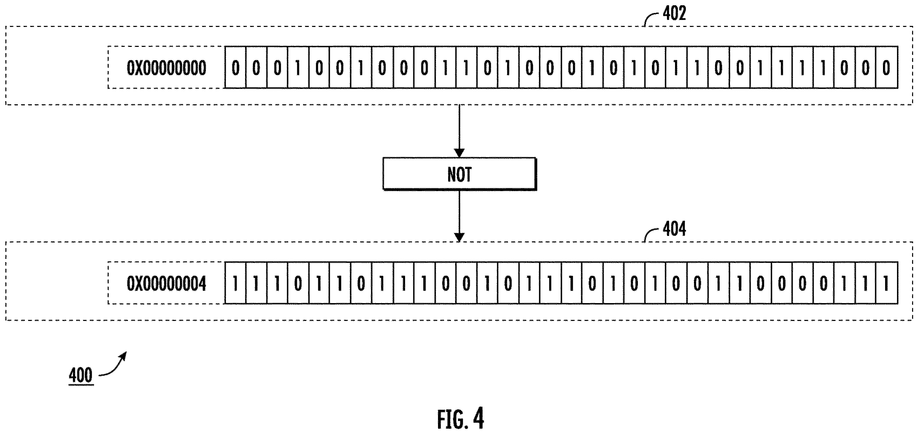

In some embodiments, an example processor (such as, but not limited to, the processor 101 of the example apparatus 100 described above in connection with FIG. 1, the processing unit 211 of the electronic circuit 200 described above in connection with FIG. 2, and/or the like) may generate an example complement of the random value by performing an example inverting operation (for example, a NOT operation) based at least in part on the random value generated at step/operation 303. Additionally, or alternatively, an example processor may generate an example complement of the random value by performing a XOR operation on the random value with a value FFFFFFFF. Additional example details associated with the inverting operation are described herein, including, but not limited to, those described in connection with at least FIG. 4.

As an example, if an example random value may be represented in the following hexadecimal representation:
0xA5A5A5A5
then the example complement of the above example random value may be represented in the following hexadecimal representation:
0X5A5A5A5A

While the description above provides an example random value and an example complement of the example random value, it is noted that the scope of the present disclosure is not limited to the description above.

Referring back to FIG. 3, subsequent to and/or in response to step/operation 305, some example methods in accordance with some embodiments of the present disclosure proceed to step/operation 307. In some embodiments, an example processor (such as, but not limited to, the processor 101 of the example apparatus 100 described above in connection with FIG. 1, the processing unit 211 of the electronic circuit 200 described above in connection with FIG. 2, and/or the like) may shred data stored in the memory unit.

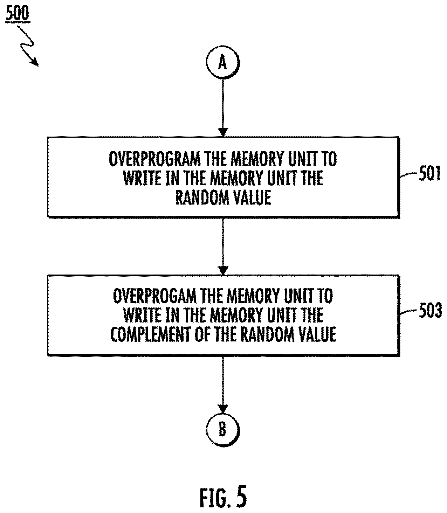

In some embodiments, the example processor shreds data stored in the memory unit by overprogramming the memory unit to write in the memory unit successively the random value generated at step/operation 303 and the complement of the random value determined at step/operation 305. After successively overprogramming the memory unit to write in the memory unit the random value and the complement of the random value, the original data stored in the memory unit is shredded and cannot be retrieved again, thereby improving security and confidentiality of data storage and processing. Additional details are described herein, including, but not limited to, those described in connection with at least FIG. 5 to FIG. 6.

Referring back to FIG. 3, subsequent to and/or in response to step/operation 307, some example methods in accordance with some embodiments of the present disclosure proceed to step/operation 309 and end.

In some embodiments, shredding data stored in the memory unit may be performed upon a power failure detection. In the present disclosure, the term "power failure detection" refers to a mechanism that recognizes when there is an interruption or drop in the power supply to the data storage system. In the event of power failure, there is a risk that unsaved data could remain in a recoverable state (for example, by an unauthorized party). By implementing data shredding in accordance with various embodiments of the present disclosure, such data is destroyed, thereby improving data security and privacy.

In some embodiments, shredding data stored in the memory unit may be performed upon completion of cryptographic operations. In the present disclosure, the term "cryptographic operation" refers to an operation that secures data through application of cryptographic algorithms (such as, but not limited to, encryption). For example, when cryptographic operations are completed, a copy of the cryptographic key may remain in the memory. By implementing data shredding in accordance with various embodiments of the present disclosure, such copy is destroyed, thereby improving data security and privacy.

In some embodiments, a memory may comprise a plurality of memory units. In some embodiments, the steps of generating the random value (for example, described in connection with step/operation 303 of FIG. 3), determining the complement of the random value (for example, described in connection with step/operation 305 of FIG. 3), and shredding the data (for example, described in connection with step/operation 307 of FIG. 3) may be performed for each of one or more memory units of a memory. In such example embodiments, data stored in the memory is destroyed and cannot be retrieved again, thereby improving security and confidentiality of data storage and processing.

Referring now to FIG. 4, an example memory map diagram 400 illustrates example data operations associated with example methods in accordance with some embodiments of the present disclosure. In particular, the example memory map diagram 400 illustrates generating an example complement of an example random value.

In some embodiments, an example processor (such as, but not limited to, the processor 101 of the example apparatus 100 described above in connection with FIG. 1, the processing unit 211 of the electronic circuit 200 described above in connection with FIG. 2, and/or the like) may generate a complement of the random value by performing an inverting operation (such as, but not limited to, a NOT operation) based at least in part on the random value.

In the example shown in FIG. 4, an example random value 402 is stored in a memory unit associated with the memory address 0X00000000. In such an example, an example processor may generate a complement 404 of the random value based on performing a NOT operation on the random value 402.

In accordance with various embodiments of the present disclosure, a "NOT" operation or an inverting operation refers to a type of data operations that changes or inverts each bit in value. For example, if a bit in the value is zero (0), a NOT operation changes said bit to one (1). If a bit in the value is one (1), a NOT operation changes said bit to zero (0).

In some embodiments, the example processor stores the complement 404 on the memory unit associated with the memory address 0X00000004.

Referring now to FIG. 5, an example flow diagram 500 illustrates example methods in accordance with some embodiments of the present disclosure.

As illustrated in the examples above, there are many technical challenges and difficulties associated with memory shredding. Various embodiments of the present disclosure overcome such technical challenges and difficulties, and provide various technical advantages and improvements. For example, various embodiments in accordance with the example methods shown in FIG. 5 may shred data stored in a memory unit by overprogramming the memory unit to write in the memory unit successively the random value and the complement of the random value. As such, various embodiments of the present disclosure in accordance with the example methods shown in FIG. 5 may provide various technical benefits and advantages such as, but not limited to, improving security and confidentiality of data storage and processing by effectively wiping or shredding sensitive data stored in the memory units such that it cannot be retrieved again.

The example flow diagram 500 shown in FIG. 5 starts at block A, which is connected to the step/operation 307 of FIG. 3 for shredding data stored in the memory unit. As such, the example flow diagram 500 shown in FIG. 5 illustrates example methods associated with shredding data stored in the memory unit.

In some embodiments, subsequent to and/or in response to block A, some example methods in accordance with some embodiments of the present disclosure proceed to step/operation 501. In some embodiments, an example processor (such as, but not limited to, the processor 101 of the example apparatus 100 described above in connection with FIG. 1, the processing unit 211 of the electronic circuit 200 described above in connection with FIG. 2, and/or the like) may overprogram the memory unit to write in the memory unit the random value at step/operation 501.

Referring back to FIG. 5, subsequent to and/or in response to step/operation 501, some example methods in accordance with some embodiments of the present disclosure proceed to step/operation 503. In some embodiments, an example processor (such as, but not limited to, the processor 101 of the example apparatus 100 described above in connection with FIG. 1, the processing unit 211 of the electronic circuit 200 described above in connection with FIG. 2, and/or the like) may overprogram the memory unit again to write in the memory unit the complement of the random value at step/operation 503.

Referring back to FIG. 5, subsequent to and/or in response to step/operation 503, some example methods in accordance with some embodiments of the present disclosure proceed to block B, which is connected back to the step/operation 309 of FIG. 3.

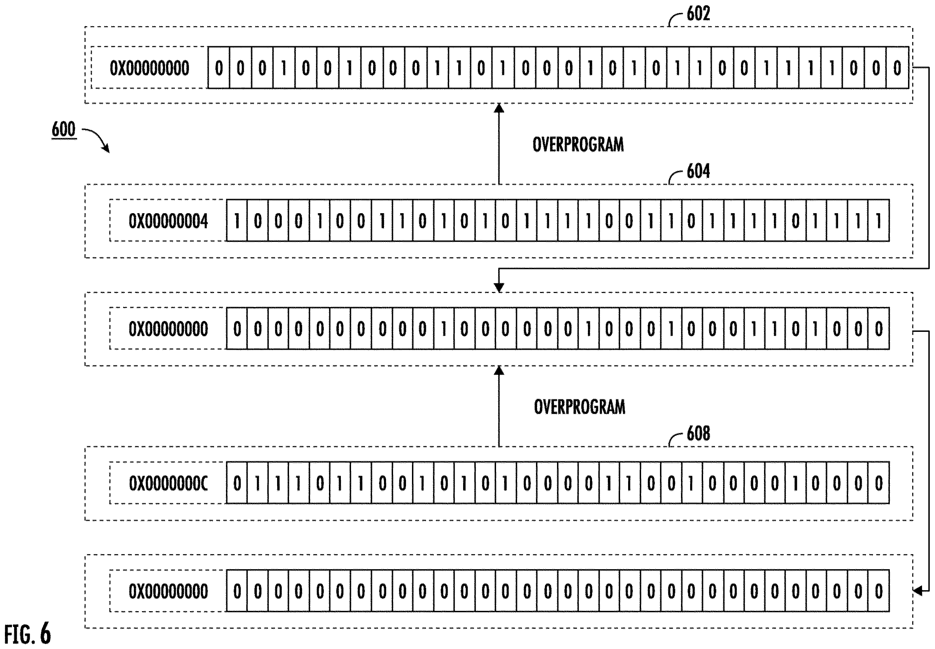

Referring now to FIG. 6, an example memory map diagram 600 illustrates example data operations associated with example methods in accordance with some embodiments of the present disclosure.

In some embodiments, an example overprogramming operation may be computationally equivalent to an AND operation. In the present disclosure, the term "AND operation" refers to a type of data operation that determines whether all inputs (for example, binary bits) are one. If one of the inputs is zero, the output from the AND operation is zero. If all inputs are one, the output from the AND operation is one. As such, bits are flipped from one to zero after programming successively the random value and the complement of the random value to the bits, and it is not possible to flip bits from zero to one after programming successively the random value and the complement of the random value to the bits.

In the example shown in FIG. 6, an example stored data 602 is in an example memory unit with the memory address 0X00000000. In some embodiments, an example processor (such as, but not limited to, the processor 101 of the example apparatus 100 described above in connection with FIG. 1, the processing unit 211 of the electronic circuit 200 described above in connection with FIG. 2, and/or the like) may perform an overprogramming operation to the stored data 602 using a random value 604.

Continuing in the above examples, an example processor (such as, but not limited to, the processor 101 of the example apparatus 100 described above in connection with FIG. 1, the processing unit 211 of the electronic circuit 200 described above in connection with FIG. 2, and/or the like) may perform another overprogramming operation using a complement 608 of the random value. In some embodiments, the random value 604 and the complement 608 of the random value are complement to one another.

In the examples shown in FIG. 6, the example first overgrooming operation and the example second overgrooming operation may be based on AND operations and may shred any stored value, providing technical benefits and advantages such as, but not limited to, effective shredding of sensitive data and/or information stored in the memory units. In the example shown in FIG. 6, the result of shredding the memory address 0X00000000 illustrates that various embodiments of the present disclosure may destroy the original data stored in the memory address 0X00000000.

As illustrated in various examples above, example methods in accordance with some embodiments of the present disclosure may include the following steps and/or operations:
selecting a random value;
overprogramming the sensitive data to shred with the random value; and
overprogramming the sensitive data again using the complement value of the random value.

As illustrated in the above example, instead of overprogramming once with all zeros (0x00000000), example methods in accordance with the present disclosure over-program the memory twice with a random value and its complement. In such examples, the double overprogramming technique significantly reduces the likelihood of bits not being cleared and significantly reduces the odds of an attacker retrieving the value of previous copies of sensitive data.

The following example pseudocode illustrates example implementation of the example method in accordance with an example method of the present disclosure:

| | |
|---|---|
| erased page: | FFFFFFFF FFFFFFFF FFFFFFFF FFFFFFF |
| programmed secret: | FFFFFFFF 1234ABCD FFFFFFFF FFFFFFFF |
| programmed neighbors: | 00000001 1234ABCD 0A0B0C0D 42424242 |
| wipe secret: | |
| pick a random value P | = A5A5A5A5 |
| overprogram the secret with P: | 00000001 xxxxxxxx 0A0B0C0D 42424242 |
| overprogram the secret with ~P: | 00000001 xxxxxxxx 0A0B0C0D 42424242 |
| (~P = P XOR FFFFFFFF) | = 5A5A5A5A |

In the above implementation, the sensitive data is "1234ABCD," the random value is "A5A5A5A5," and the complement of the random value is "5A5A5A5A." Continuing in this example implementation, overprogramming the sensitive data with the random value may include the following calculation:
1234ABCD AND A5A5A5A5 4 24A185

Continuing in this example implementation, overprogramming again with the complement of the random value may include the following calculation:
24A185 AND 5A5A5A5A → 0

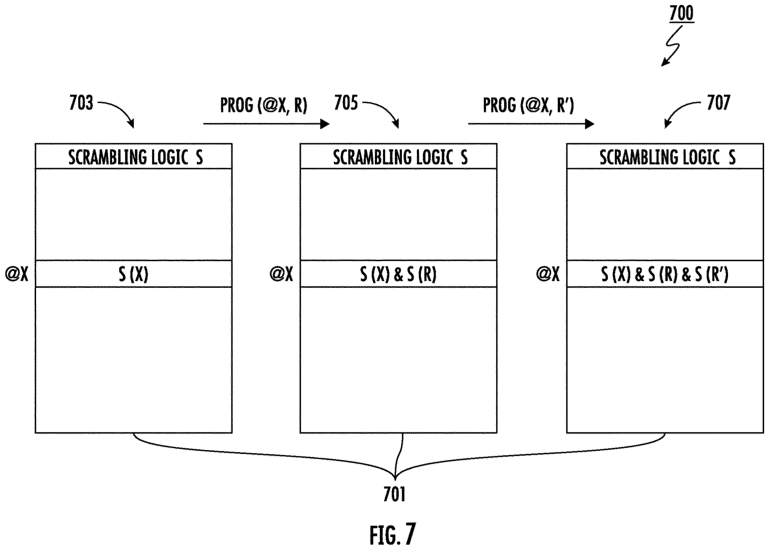

One of the technical aspects of the present disclosure relate to scrambling logic in memory units. Referring now to FIG. 7, an example diagram 700 that illustrates an example scrambling logic securing an example memory unit in accordance with some embodiments of the present disclosure is provided.

In the example shown in FIG. 7, an example memory unit 701 is illustrated. In some embodiments, the example memory unit 701 is in the form of a non-volatile memory (NVM). For example, the example memory unit 701 may be an electrically erasable programmable read-only memory (EEPROM). Additionally, or alternatively, the example memory unit 701 may be a Flash memory. Additionally, or alternatively, the example memory unit 701 may be other types of NVM.

FIG. 7 illustrates an example where the example memory unit 701 (such as, not limited to, a NVM, an EEPROM, a Flash memory, and/or the like) is secured with a scrambling logic S. In the present disclosure, the term "scrambling logic" refers to an algorithmic procedure or function that may be implemented in a memory unit (such as, not limited to, a NVM, an EEPROM, a Flash memory, and/or the like) to obfuscate, rearrange, and/or transform original data so that such data is securely stored in a masked fashion. For example, when the memory unit 701 is secured with the scrambling logic S, data that is written to or read from the memory unit 701 goes through a data obfuscation process defined by the scrambling logic S, transferring the original data into masked data. Because the original data is not directly stored in the memory unit 701, directly reading data from the memory unit 701 does not reveal the original data. As such, securing the example memory unit 701 with the scrambling logic S provides various technical benefits and advantages such as, but not limited to, enhancing the confidentiality of the memory unit 701.

In various embodiments of the present disclosure, the scrambling logic S may vary from part to part, and may vary with different memory addresses.

In the example shown in FIG. 7, the example memory unit 701 stores a value x at the address @x. Similar to those described above, various embodiments of the present disclosure provide methods for shredding the value X at the address @x without the need for a separate Erase operation.

For example, at state 703 shown in FIG. 7, the original data X is stored in the memory unit 701 at address @x as "S (X)", which represents the result of scrambling logic S on the original data X.

Various embodiments of the present disclosure may generate a random value R and perform an example programming operation at the address @x using the random value R. In the example shown in FIG. 7, such an example operation is represented as "PROG (@X, R)," which transforms the memory unit 701 from the state 703 to the state 705. As described above, programming a value R in a NVM (such as, not limited to, an EEPROM, a Flash memory, and/or the like) at a given address @x corresponds to an AND operation between the value already stored in the NVM at this address @x with the value R. In the example shown in FIG. 7, because of the scrambling logic S, after performing the PROG (@X, R) operation, the value stored at address @x becomes "S (X) & S (R)." In such an example, "S (X)" is the result of scrambling logic S on the original data X, "S (R)" is the result of scrambling logic S on the random value R, and "S (X) & S (R)" is the result of programming a random value R to the address @x of a NVM that implements the scrambling logic S.

Continuing in the example shown in FIG. 7, various embodiments of the present disclosure may determine a complement R' of the random value R, and may perform an example programming operation at the address @x using the random value R. In the example shown in FIG. 7, such an example operation is represented as "PROG (@X, R')," which transforms the memory unit 701 from the state 705 to the state 707. As described above, programming a value R' in a NVM (such as, not limited to, an EEPROM, a Flash memory, and/or the like) at a given address @x corresponds to an AND operation between the value already stored in the NVM at this address @x with the value R'. In the example shown in FIG. 7, because of the scrambling logic S, after performing the PROG (@X, R') operation, the value stored at address @x becomes "S (X) & S (R) & S (R')." As described above, "S (X) & S (R)" is the result of programming a random value R to the address @x of a NVM that implements the scrambling logic S, and "S (X) & S (R) & S(R')" is the result of programming a random value R to the address @x of a NVM that implements the scrambling logic S, and then programming a complement R' of the random value R to the address @x.

As illustrated in the example shown in FIG. 7, implementing various embodiments of the present disclosure in a NVM that is secured with a scrambling logic may provide various technical benefits and advantages such as, but not limited to, improved data security and confidentiality in NVM.

While this detailed description has set forth some embodiments of the present invention, the appended claims also cover other embodiments of the present invention which may differ from the described embodiments according to various modifications and improvements. For example, in some embodiments, example overprogramming operations may be in the forms of or comprise one or more additional and/or alternative data operations.

Within the appended claims, unless the specific term "means for" or "step for" is used within a given claim, it is not intended that the claim be interpreted under 35 U.S.C. 112, paragraph 6.

## Claims

1. A method for shredding data stored in a memory unit, the method comprising:
generating, by a processor, a random value;
determining, by the processor, a complement of the random value; and
shredding data stored in the memory unit by overprogramming the memory unit to write in the memory unit successively the random value and the complement of the random value.

2. An electronic device comprising a memory and one or more processors communicatively coupled to the memory, the one or more processors configured to:
generate a random value;
determine a complement of the random value; and
shred data stored in the memory by overprogramming the memory to write in one or more memory units of the memory successively the random value and the complement of the random value.

3. The electronic device of claim 2, wherein the one or more processors are configured to perform the steps of generating the random value, determining the complement of the random value, and shredding the data for each of the one or more memory units of the memory.

4. One or more non-transitory computer-readable storage media for shredding data stored in a memory unit, the one or more non-transitory computer-readable storage media comprising instructions that, when executed by one or more processors, cause the one or more processors to:
generate a random value;
determine a complement of the random value; and
shred the data stored in the memory unit by overprogramming the memory unit to write in the memory unit successively the random value and the complement of the random value.

5. The method of claim 1, or the device of claim 2 or 3, or the storage media of claim 4, wherein the memory unit is a non-volatile memory (NVM).

6. The method, or device, or storage media, of claim 5, wherein the NVM is an electrically erasable programmable read-only memory (EEPROM).

7. The method, or device, or storage media, of claim 5 or 6, wherein the NVM is a Flash memory.

8. The method, or device, or storage media, of any of claims 5 to 7, wherein the NVM is secured with a scrambling logic.

9. The method of any of claims 1, 5 to 8, or the device of any of claims 2, 3, 5 to 7, or the storage media of any of claims 4 to 8, wherein the random value is generated using a random number generator.

10. The method of any of claims 1, 5 to 9, or the device of any of claims 2, 3, 5 to 9, or the storage media of any of claims 4 to 9, wherein determining the complement of the random value comprises performing, by the processor, a NOT operation on the random value.

11. The method of any of claims 1, 5 to 10, or the device of any of claims 2, 3, 5 to 10, or the storage media of any of claims 4 to 10, wherein shredding the data stored in the memory unit is performed upon a power failure detection.

12. The method of any of claims 1, 5 to 11, or the device of any of claims 2, 3, 5 to 11, or the storage media of any of claims 4 to 11, wherein shredding the data stored in the memory unit is performed upon completion of cryptographic operations.
